Europäisches Patentamt

European Patent Office

Office européen des brevets

(19)

(11) Publication number: **0 247 888**
**A1**

(12) **EUROPEAN PATENT APPLICATION**

(21) Application number: **87304764.1**

(22) Date of filing: **29.05.87**

(51) Int. Cl.⁴: **C 08 J 3/24**
**C 08 K 13/02, C 08 L 101/04,**
**C 08 L 71/02**
**//(C08K13/02,3:00,3:22,3:26,**
**5:39)**

(30) Priority: **30.05.86 GB 8613158    08.04.87 US 35825**

(43) Date of publication of application:
**02.12.87 Bulletin 87/49**

(84) Designated Contracting States: **BE DE GB**

(71) Applicant: **HERCULES INCORPORATED**
**Hercules Plaza**
**Wilmington Delaware 19894 (US)**

(72) Inventor: **Body, Ralph William**
**608 Cheltenham Road**
**Wilmington Delaware 19808 (US)**

**Kyllingstad, Vernon Leslie**
**22 Drummond Road Highland West**
**Wilmington Delaware 19808 (US)**

(74) Representative: **De Minvielle-Devaux, Ian Benedict Peter**
**et al**
**CARPMAELS & RANSFORD 43, Bloomsbury Square**
**London WC1A 2RA (GB)**

(54) **Cross-linking halogen-containing polymers.**

(57) A cure system for halogen-containing polymers that comprises a thiourea, an inorganic activator, an inorganic acid acceptor, and optionally, an organic accelerator, which yields stable cross-linked products when incorporated into normal vulcanization procedures.

EP 0 247 888 A1

Bundesdruckerei Berlin

**Description**

CROSS-LINKING HALOGEN-CONTAINING POLYMERS

This invention relates to cross-linking halogen-containing polymers. Particularly, this invention relates to a process of cross-linking halogen-containing polymers with an aliphatic substituted thiourea, a Group Ia or IIa oxide, hydroxide or carbonate, an inorganic activator and optionally an organic accelerator in normal vulcanization procedures. Group Ia and IIa as used herein, refer to the elements in Groups Ia and IIa of the long form of the Mendeleeff Periodic Table as recorded in Moeler and Therald, Inorganic Chemistry (John Wiley and Sons, 1959), p. 123.

Processes of cross-linking polymers can involve the use of cure systems comprising various cross-linking agents, activators, acid acceptors and optionally accelerators. The agents perform the actual cross-linking, the activator and the accelerator modify the cure rate and cure efficiency and the acid-acceptors scavenge ions resulting from the cross-linking reaction.

A cure system used in cross-linking halogen-containing polymers that uses as its major components ethylene thiourea (ETU) as a cross-linking agent and a lead containing activator/acid acceptor such as red lead $(Pb_3O_4)$ is known in the art. This system yields stable vulcanizates possessing good physcial properties. However, lead compounds are toxic and produce undesirable surface bloom on finished parts. For these reasons, a lead-free cure package is desirable. Another problem with the red lead/ETU cure system is that it is too scorchy to be mixed in a single-pass mixing process.

It has now been discovered that a halogen-containing polymer can be cross-linked in the absence of lead salts to form a stable vulcanizate with excellent physical properties by using a substituted thiourea as the cross-linking agent, an inorganic base as the acid acceptor and an inorganic activator in normal vulcanization procedures. The vulcanization profile can be further modified by the use of organic vulcanization accelerators. These cure packages are sufficiently scorch resistant to allow compounds containing them to be mixed in a single pass mix cycle.

Accordingly, this invention relates to a process of cross-linking halogen-containing polymers by using a cure system comprising: (I) an aliphatic substituted thiourea, (2) an inorganic base selected from the group consisting of a Group Ia oxide, a Group Ia hydroxide, a Group Ia carbonate, a Group IIa oxide, a Group IIa hydroxide, a Group IIa carbonate; (3) an inorganic activator selected from the group $MnO_2$, $ZnO_2$, $BaO_2$, $CaO_2$, $MgO_2$, inorganic bromates, inorganic chromates and inorganic dichromates; and optionally (4) an organic accelerator selected from the group mercapto benzothiazole, mercaptobenzothiazole disulfide, various sulfenamides such as N-t-butyl-2-benzothiazole sulfenamide and various substituted thiuram disulfides such as tetramethylthiuram disulfide.

The halogen-containing polymers to be cross-linked in accordance with this invention may be saturated or unsaturated and contain at least 1.0% and preferably 5.8% halogen by weight.

Typical halogen-containing polymers used in accordance with this invention are epihalohydrin polymers, epichlorohydrin homopolymers, epichlorohydrin-ethylene oxide copolymers, epichlorohydrin-propylene oxide copolymers, epichlorohydrin-ethylene oxide-allyl glycidyl ether copolymers, epichlorohydrin-propylene oxide-allyl glycidyl ether copolymers, epichlorohydrin-allyl glycidyl ether copolymers, epifluorohydrin homopolymer epifluorohydrin-ethylene oxide copolymers, epifluorohydrin-propylene oxide copolymers, epifluorohydrin-ethylene oxide-allyl glycidyl ether copolymers, epifluorohydrin-propylene oxide-allyl glycidyl ether copolymers, poly(vinyl chloride), chlorinated polyethylene, polychloroprene, chloro-sulfonated polyethylene, chlorinated butyl rubber and brominated butyl rubber.

Typical substituted thioureas are the aliphatic substituted thioureas such as ethylene thiourea, I,3-diethyl thiourea, I,3-dibutylthiourea and I,I,3-trimethyl-thiourea. Of these, ethylene thiourea is preferable because of broad availability.

The inorganic bases used in accordance with this invention are selected from the Group Ia and Group IIa oxides, hydroxides and carbonates. The preferred base is magnesium oxide, again for its ready availability.

The inorganic activators used in accordance with this invention are selected from the group consisting of Group IIa peroxides, Manganese dioxide, Zinc peroxide and Group Ia bromates, chlorates, chromates and dichromates. The preferred material is $MnO_2$.

The optional organic accelerator used in accordance with this invention are selected from the group mercaptobenzothiazole, mercaptobenzothiazole disulfide, various sulfenamides such as N-t-butyl-2-benzothiazole sulfenamide, various thiuram monosulfides such as tetramethyl thiuram monosulfide and various substituted thiuram disulfides such as tetramethylthiuram disulfide. The preferred materials are mercaptobenzothiazole, mercaptobenzothiazole disulfide and tetramethylthiuram disulfide.

This invention can also be used to cross-link blends of halogen-containing polymers and blends of halogen-containing polymers and non-halogen-containing polymers. The only requirement is that a sufficient amount of halogen-containing polymer be present to effect cross-linking, i.e., halogen must be present in an amount of at least 1% by weight based upon the total weight of the polymer blend.

Quantities of the cure system components, i.e., cross-linking agent, inorganic acid acceptor, inorganic activator and optionally, organic accelerator, to be used in accordance with this invention can vary. Based on the halogen-containing polymer, the quantity of the cross-linking agent varies between about 0.1% and about 10.0% and preferably between 0.5% and 5.0%; the quantity of activator varies between about 0.1% and about

l0.0% and preferably between about 0.5% and about 5%. When employed, the optional acccelerator level varies between about 0.l% and about l0.0% and preferably between about 0.l% and about 5.0%. The extent of cross-linking depends on the ingredients selected, the quantity used and the time/temperature balance of the cure.

The inorganic base may also be used as a filler. Based on the polymer weight, the quantity of inorganic base may vary from about 0.25% to about 200% and preferably between about 0.5% and about 50% and more preferably between about l.0% and about 20.0%.

Any state-of-the-art method can be used to blend the halogen-containing polymer with the cure system components. Conventional rubber internal mixers such as the Banbury mixer and two-roll milling are methods that integrally mix the cure system components uniformly throughout the polymer and produce uniform cross-linking when the blend is subsequently heated. Preferably, milling or mixing should be performed between about 50°C and about l00°C so that the blends retain good scorch resistance when measured at l25°C. Other methods of combining the cure system components with the polymer are known to those skilled in the art.

Cross-linking of the halogen-containing polymer occurs between about l40°C and about 260°C, preferably between about l50°C and about 225°C. The time needed for cross-linking depends on the combination of cross-linking ingredients selected and varies inversely with the temperature and ranges from about 5 seconds to about l0 hours. The cross-linking and occur in air in an open container, in a heat transfer medium at normal atmospheric pressure, or, preferably in a metal mold under pressure or in a container under pressure from an inert atmosphere such as steam. In addition, other curing methods such as microwave, liquid curing medium baths and induction heating are known to those skilled in the art.

In addition to the cure system, other ingredients may be added to the halogen-containing polymer such as fillers, extenders, plasticizers, antioxidants, scorch inhibitors, pigments, etc., and other materials known to those skilled in the art of rubber compounding. Good results can be obtained by adding reinforcing agents such as carbon black which increase tensile strength, stiffness and abrasion resistance.

In the following examples, the carbon black, plasticizer, antioxidant and processing aid are added to the polymer in a Banbury mixer. The remainder of the ingredients are added subsequently on a 2-roll mill. To determine cure characteristics, the combined ingredients are heated in a Monsanto Oscillating Disc Rheometer (ODR) set for l00 cpm and 3° arc. The information recorded is in accord with ASTM D 2084 (American Society for Testing and Materials, Philadelphia, PA). The cured physical properties are measured on standard press cured sheets in accordance with ASTM D 4l2.

Examples l-l4 are offered to illustrate the utility of this invention. Example l5 is offered to show similar properties produced by the most common competitive cure system. It should be noted that the cured tensile sheets from examples l, 6 and 7 do not exhibit surface bloom whereas the sheet from example l5 shows the typical lead bloom.

|  | Example | | |
|---|---|---|---|
|  | 1 | 2 | 3 |
| Herclor C$^R$ [1] | 100 | 100 | 100 |
| N-762 Carbon Black | 50 | 50 | 50 |
| DOP[2] | 10 | 10 | 10 |
| Stearic Acid | 1.0 | 1.0 | 1.0 |
| Nickel dimethyldithio-carbamate | 1.0 | 1.0 | 1.0 |
| MgO | 5.0 | - | - |
| BaCO$_3$ | - | 5.0 | - |
| CaO | - | - | 5.0 |
| MnO$_2$ | 2.0 | 2.0 | 2.0 |
| Ethylene Thiourea | 1.1 | 1.1 | 1.1 |

ODR Cure Data, 400°F. +3° Arc

| | | | |
|---|---|---|---|
| M$_L$ [3] | 11.1 | 12.2 | 12.2 |
| M$_H$ [4] | 61.1 | 67.0 | 91.0 |
| t$_s$2 [5] | 1.0 | 0.9 | 0.8 |
| t(90) [6] | 7.9 | 7.8 | 8.6 |
| CRI [7] | 14.5 | 14.5 | 12.8 |

Physical Properties Cured 6 Minutes at 400°F.

| | |
|---|---|
| 100% Modulus, psi. | 470 |
| Tensile Strength, psi. | 1650 |
| Elongation, % | 310 |
| Shore A Hardness, Points | 66 |

---

1) copolymer of epichlorohydrin and ethylene oxide
2) dioctylphthalate
3) minimum torque
4) highest torque
5) minutes to two inch-pound rise above M$_L$
6) time to 90% of cure
7) cure rate index = 100/cure time - ts$^2$

|                                          |   4   |   5   |   6   |   7   |   8   |
|------------------------------------------|-------|-------|-------|-------|-------|
| Herclor C                                | 100   | 100   | 100   | 100   | 100   |
| N-762 Carbon Black                       | 50    | 50    | 50    | 50    | 50    |
| DOP                                      | 10    | 10    | 10    | 10    | 10    |
| Stearic Acid                             | 1.0   | 1.0   | 1.0   | 1.0   | 1.0   |
| Nickel dimethyldi-thiocarbamate          | 1.0   | 1.0   | 1.0   | 1.0   | 1.0   |
| MgO                                      | 5.0   | 5.0   | 5.0   | 5.0   | 5.0   |
| $ZnO_2$                                  | 2.0   | -     | -     | -     | -     |
| $MnO_2$                                  | -     | 2.0   | 2.0   | 2.0   | 2.0   |
| Mercaptobenozthiazole-disulfide          | -     | 1.0   | -     | -     | -     |
| Mercaptobenzo-thiazole                   | -     | -     | 1.0   | -     | -     |
| Tetramethylthiruam disulfide             | -     | -     | -     | 1.0   | -     |
| N-t-Butyl-2-Benzo-thiazole Sulfenamide   | -     | -     | -     | -     | 1.0   |
| Ethylene Thiourea                        | 1.1   | 1.1   | 1.1   | 1.1   | 1.1   |

ODR Cure Data, 400°F. +3° Arc

|          |   4   |   5   |   6   |   7   |   8   |
|----------|-------|-------|-------|-------|-------|
| $M_L$    | 11.3  | 11.1  | 11.1  | 10.3  | 10.3  |
| $M_H$    | 71.6  | 78.0  | 77.0  | 85.0  | 77.0  |
| $t_s2$   | 0.9   | 1.2   | 1.2   | 1.2   | 1.2   |
| t(90)    | 7.1   | 5.1   | 4.8   | 6.7   | 5.2   |
| CRI      | 16.1  | 25.6  | 27.8  | 18.2  | 25.0  |

Physical Properties Cured 6 Minutes at 400°F.

|                          |   6   |   7   |
|--------------------------|-------|-------|
| 100% Modulus, psi.       | 530   | 650   |
| Tensile Strength, psi.   | 1650  | 1730  |
| Elongation, %            | 320   | 250   |
| Shore A Hardness, Points | 68    | 72    |

| | 9 | 10 | 11 | 12 | 13 | 14 |
|---|---|---|---|---|---|---|
| Herclor C | 100 | 100 | 100 | 100 | 100 | 100 |
| N-762 Carbon Black | 50 | 50 | 50 | 50 | 50 | 50 |
| DOP | 10 | 10 | 10 | 10 | 10 | 10 |
| Stearic Acid | 1.0 | 1.0 | 1.0 | 1.0 | 1.0 | 1.0 |
| Nickel dimethyl- dithiocarbamate | 1.0 | 1.0 | 1.0 | 1.0 | 1.0 | 1.0 |
| MgO | 5.0 | 5.0 | 5.0 | 5.0 | 5.0 | 5.0 |
| $MnO_2$ | 2.0 | 2.0 | 2.0 | 2.0 | 2.0 | 2.0 |
| N-Nitrosodiphenyl amine | 1.0 | – | 0.5 | – | – | – |
| Quinone Dioxime | – | 1.0 | 0.5 | – | – | – |
| Ethylene Thiourea | 1.1 | 1.1 | 1.1 | – | – | – |
| Trimethyl Thiourea | – | – | – | 1.4 | – | – |
| N,N'-Diethyl Thiourea | – | – | | – | 1.6 | – |
| N,N'-Dibutyl Thiourea | – | – | – | – | – | 2.25 |
| ODR Cure Data, 400°F. +3° Arc | | | | | | |
| $M_L$ | 12.1 | 11.4 | 8.8 | 12.5 | 13.9 | 12.1 |
| $M_H$ | 81.5 | 95.6 | 83.8 | 50.0 | 73.1 | 64.0 |
| $t_{s2}$ | 1.2 | 1.2 | 1.3 | 2.0 | 1.3 | 1.3 |
| t(90) | 7.3 | 7.2 | 7.4 | 9.9 | 9.4 | 9.2 |
| CRI | 16.4 | 16.7 | 16.4 | 12.7 | 12.3 | 12.7 |

0 247 888

15

| | |
|---|---|
| Herclor C | 100 |
| N-762 Carbon Black 50 | 50 |
| DOP | 10 |
| Stearic Acid | 1.0 |
| Nickel dimethyl-dithiocarbamate | 1.0 |
| $Pb_3O_4$ | 5.0 |
| Ethylene Thiourea | 1.1 |

ODR Cure Data, 400°F. +3° Arc

| | |
|---|---|
| $M_L$ | 12.3 |
| $M_H$ | 93.2 |
| $t_s2$ | 0.7 |
| t(90) | 6.6 |
| CRI | 16.9 |

Physical Properties Cured 6 Minutes at 400°F.

| | |
|---|---|
| 100% Modulus, psi. | 600 |
| Tensile Strength, psi. | 1880 |
| Elongation, % | 230 |
| Shore A Hardness, Points | 72 |

**Claims**

1. The process of cross-linking a halogen-containing polymer which comprises heating a halogen-containing polymer in the presence of (I) an aliphatic-substituted thiourea, (2) an inorganic base selected from the Group la and Group lla oxides, hydroxides, and carbonates, and (3) an inorganic activator selected from the Group lla peroxides, manganese dioxide, zinc peroxide and Group la bromates, chlorates, chromates, and dichromates.

2. The process of claim I wherein the halogen-containing polymer is a blend of halogen-containing polymers.

3. The process of claim I wherein the halogen-containing polymer is a blend of at least one halogen-containing polymer and at least one nonhalogen-containing polymer.

4. The process of claim I wherein the halogen-containing polymer is at least one epihalohydrin polymer.

5. The process of claim I wherein the aliphatic substituted thiourea is ethylene thiourea.

6. The process of claim I wherein the inorganic base is magnesium oxide.

7. The process of claim I wherein the inorganic activator is manganese dioxide.

8. The process of claim I wherein an organic accelerator is present.

7

9. The process of claim 8 wherein the organic accelerator is selected from mercaptobenzothiazole, mercaptobenzo thiazole disulfide, and tetramethylthiruam disulfide.

10. A cross-linkable blend of (I) at least one halogen-containing polymer, (2) an aliphatic substituted thiourea, (3) and inorganic base selected from the Group Ia and Group IIa oxides, hydroxides, and carbonates, and (4) an inorganic activator selected from Group IIa peroxides, manganese dioxide, zinc peroxide, and Group Ia bromates, chlorates, chromates, and dichromates.

II. The cross-linkable blend of claim I0 wherein the halogen-containing polymer is at least one epihalohydrin polymers.

I2. A halogen-containing polymer cross-linked by heating in the presence of (I) an aliphatic substituted thiourea, (2) an inorganic base selected from the Group Ia and Group IIa oxides, hydroxides, and carbonates, and (3) an inorganic activator selected from the Group IIa peroxides, manganese dioxide, zinc peroxide and Group Ia bromates, chlorates, chromates, and dichromates.

I3. The cross-linked composition of claim I2 wherein the halogen-containing polymer is a blend of halogen-containing polymers.

I4. The cross-linked composition of claim I3 wherein the halogen-containing polymer is a blend of at least one halogen-containing polymer and at least one nonhalogen-containing polymer.

I5. The cross-linked composition of claim I3 wherein the halogen-containing polymer is at least one epihalohydrin polymer.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CHEMICAL ABSTRACTS, vol. 81, no. 10, 9th September 1974, page 60, abstract no. 50813k, Columbus, Ohio, US; & SU-A-395 405 (O.P. GALANOV et al.) 28-08-1973 | 1-15 | C 08 J 3/24<br>C 08 K 13/02<br>C 08 L 101/04<br>C 08 L 71/02 //<br>(C 08 K 13/02<br>C 08 K 3:00<br>C 08 K 3:22 |
| | --- | | |
| Y | US-A-3 708 461 (T. KARASTU et al.)<br>* Claims; column 4, example 2 * | 1-15 | C 08 K 3:26<br>C 08 K 5:39 ) |
| | ----- | | |
| | | | **TECHNICAL FIELDS SEARCHED (Int. Cl.4)**<br><br>C 08 K<br>C 08 L |

The present search report has been drawn up for all claims

| Place of search | Date of completion of the search | Examiner |
|---|---|---|
| THE HAGUE | 09-09-1987 | HOFFMANN K.W. |